# EUROPÄISCHE PATENTSCHRIFT

(11) **EP 1 044 932 B1**
(45) Veröffentlichungstag und Bekanntmachung des Hinweises auf die Patenterteilung: **06.11.2002**
(21) Anmeldenummer: 00101734.2
(22) Anmeldetag: 28.01.2000
(51) Int. Cl.: C03C 3/091, C03C 3/093, C03C 3/095

(54) **Alkalifreies Aluminoborosilicatglas und dessen Verwendung**
Alkali-free aluminoborosilicate glass and its use
Verre aluminoborosilicate exempt de métaux alcalins et son utilisation

(30) Priorität: 12.04.1999 DE 19916296
(43) Veröffentlichungstag der Anmeldung: 18.10.2000
(73) Patentinhaber: Schott Glas, 55122 Mainz (DE); CARL-ZEISS-STIFTUNG trading as SCHOTT GLAS, 55122 Mainz (DE)
(72) Erfinder: Peuchert, Ulrich, Dr., 55129 Mainz (DE); Brix, Peter, Dr., 55160 Mainz (DE)

(56) Entgegenhaltungen:
- EP-A- 0 901 990
- WO-A-98/27019
- DE-A- 19 601 922
- PATENT ABSTRACTS OF JAPAN vol. 1998, no. 10, 31. August 1998 (1998-08-31) -& JP 10 114538 A (NIPPON ELECTRIC GLASS CO LTD), 6. Mai 1998 (1998-05-06)
- PATENT ABSTRACTS OF JAPAN vol. 1998, no. 08, 30. Juni 1998 (1998-06-30) -& JP 10 059741 A (NIPPON ELECTRIC GLASS CO LTD), 3. März 1998 (1998-03-03)
- PATENT ABSTRACTS OF JAPAN vol. 1998, no. 06, 30. April 1998 (1998-04-30) -& JP 10 045422 A (ASAHI GLASS CO LTD), 17. Februar 1998 (1998-02-17)

## Beschreibung

Gegenstand der Erfindung ist ein alkalifreies Aluminoborosilicatglas. Gegenstand der Erfindung sind auch Verwendungen dieses Glases.

An Gläser für Anwendungen als Substrate in der Flüssigkristall- Flachdisplaytechnologie, z. B. in TN (Twisted Nematic)/STN (Super Twisted Nematic)-Displays, Active Matrix Liquid Crystal Displays (AMLCD's), Thin Film Transistors (TFT's) oder Plasma Adressed Liquid Crystals (PALC's) werden hohe Anforderungen gestellt. Neben einer hohen Temperaturwechselbeständigkeit sowie einer guten Resistenz bezüglich der im Herstellungsverfahren der Flachbildschirme eingesetzten aggressiven Chemikalien sollten die Gläser eine über einen weiten Spektralbereich (VIS, UV) hohe Transparenz sowie zur Gewichtseinsparung eine geringe Dichte aufweisen. Der Einsatz als Träger-material für integrierte Halbleiterschaltkreise z. B. in TFT-Displays ("chip on glass") erfordert darüber hinaus die thermische Anpassung an das Dünnfilmmaterial a- bzw. poly-Silicum (α ₂₀/₃₀₀ ≅ 3,7 x 10⁻⁶/K) sowie die Abwesenheit von Alkaliionen. Herstellungsbedingte Anteile von Natriumoxid unterhalb 1000 ppm sind in Hinblick auf die i. a. "vergiftende" Wirkung durch Eindiffusion von Na⁺ in die Halbleiterschicht noch tolerierbar.

Geeignete Gläser sollten großtechnisch in ausreichender Qualität (keine Blasen, Knoten, Einschlüsse), z. B. auf einer Floatanlage oder in Ziehverfahren wirtschaftlich produzierbar sein. Besonders die Herstellung dünner (< 1 mm) streifenfreier Substrate von geringer Oberflächenwelligkeit über Ziehverfahren erfordert eine hohe Entglasungsstabilität der Gläser. Ein auf die Halbleiter-Microstruktur nachteilig wirkender Schrumpf ("compaction") des Substrates während der Herstellung kann durch Einstellen einer geeigneten temperaturabhängigen Viskositätskennlinie des Glases entgegengewirkt werden: Hinsichtlich der thermischen Prozeß- und Formstabilität sollte es bei einerseits nicht zu hohen Schmelz- und Verarbeitungs (V_{A}) -temperaturen, d. h. bei einem V_{A} ≤ 1330 °C, einen hohen Unteren Kühlpunkt (UKP = "strain point"; Temperatur bei der Viskosität 10^{14,7} dPas), idealerweise größer 700°C, bzw. eine hohe Transformationstemperatur Tg, d.h. Tg > 720 °C aufweisen. Weiter ist eine geringe Dichte der Gläser gewünscht, um insbesondere bei großen Bildschirmformaten das Gesamtgewicht des Displays gering zu halten.

Die Anforderungen an Glassubstrate für die LCD LCD-Displaytechnologie sind auch in "Glass Substrates for AMLCD applications: properties and implications" von J.C. Lapp, SPIE Proceedings, Vol. 3014, Invited paper (1997) beschrieben.

Prinzipiell übereinstimmende Anforderungen weder an Gläser für Substrate in der Dünnschicht-Photovoltaik, speziell auf Basis von microkristallinem Silicium (µc-Si), gestellt.

Eine wesentliche Voraussetzung für die wirtschaftliche Durchsetzung der Dünnschicht-Photovoltaik gegenüber der kostenintensiven Solartechnologie auf Basis kristalliner Si-Wafer ist das Vorhandensein kostengünstiger hochtemperaturbeständiger Substrate.
Zur Herstellung von µc-Si-Solarzellen sind derzeit zwei unterschiedliche Beschichtungsverfahren bekannt. Besonders günstig in Hinsicht auf hohe Abscheidungsgeschwindigkeiten erweist sich ein Hochtemperatur - CVD- Prozeß mit dem billigen Trichorsilan als Si-Quelle. Dieses Verfahren erfordert die Aufheizung einer geeigneten Unterlage auf 1000°C und darüber hinaus. Als Substrate kommen dann nur vergleichsweise teure Keramik, Graphit, Silicium oder ähnliche Materialien in Frage. Auch der Einsatz transparenter Glaskeramiken wird in der Literatur diskutiert (L. R. Pinckney: " Transparent, high Strain Point Glass-Ceramics", Proc. 18th Intern. Conf. Glass, San Francisco; Amer. Ceram. Soc., Ohio, 1998 bzw. L. R. Pinckney, G. H. Beall: "Nanocrystalline non-alkali glass-ceramics", J. Non-Cryst. Solids 219 (1997)). Nach dem Hochtemperatur- CVD- Verfahren realisierte Wirkungsgrade auf kleinen Flächen liegen derzeit um ca. 11%.

Alternativ zu dem Hochtemperaturansatz werden Si-Niedertemperaturabscheideprozesse entwickelt, welche den Einsatz des billigeren Substratmaterials Glas gestatten. Als eine Möglichkeit bietet sich dabei die Abscheidung amorphen Siliciums bei niedrigen Temperaturen bis 300°C sowie in einem Folgeschritt die Rekristallisation der Schichten über Laser- bzw. zone-melting-Verfahren an. Um Verformungen der Glasplatte bei den im Temperprozeß herrschenden Temperaturen zu vermeiden, ist ein an Silicium thermisch angepaßtes Spezialglas mit sehr hoher Temperaturbeständigkeit erforderlich. Geeigneterweise sind dies Gläser mit einer Transformationstemperatur T_{g} von mindestens 750 °C. Auch für Substrate für die TFT-Displaytechnologie ist infolge der Tendenz, von a-Si- auf poly-Si-Beschichtungen überzugehen, eine möglichst hohe Temperaturbeständigkeit des Substrates erwünscht.

Beschichtungen überzugehen, eine möglichst hohe Temperaturbeständigkeit des Substrates erwünscht.

Die derzeitige Entwicklung der µc-Si-Technologie geht in Richtung eines Substrat-Konzeptes, d. h. das Trägermaterial bildet die Basis der Solarzellen und wird nicht vom einfallenden Licht passiert. Jedoch ist eine Entwicklung hin zur kostengünstigeren Superstrat-Anordnung (Licht passiert Trägermaterial, kein Deckglas notwendig) nicht ausgeschlossen. Zur Erzielung hoher Wirkungsgrade ist dann eine hohe Transparenz des Glases im VIS/UV erforderlich, wodurch sich der Einsatz von semi- transparenten Glaskeramiken, neben den oben aufgeführten Kostengründen, als nachteilig erweist.

Das genannte Anforderungsprofil wird am ehesten durch Erdalkalialuminoborosilicatgläser erfüllt. Die bekannten und in den folgenden Schriften beschriebenen Gläser für Display- oder Solarzellensubstrate weisen jedoch noch Nachteile auf und erfüllen nicht den gesamten Anforderungskatalog.

Zahlreiche Schriften beschreiben Gläser mit relativ hohen B₂O₃-Gehalten, so DE 196 01 922 A, JP 58-120 535 A, JP 60-141 642 A, JP 8-295 530 A, JP 9-169 538 A, JP 10-59 741 A, JP 10-722 37 A, EP 714 862 A1, EP 341 313 B1, US 5,374,595. Diese Gläser besitzen nicht die geforderten hohen Transformationstemperaturen bzw. unteren Kühlpunkte.

Gleiches gilt für die SiO₂-armen Gläser aus JP 61-132 536 A sowie für die Gläser aus der DE 197 39 912 C1 mit maximal 60 Gew.-% SiO₂ und wenigstens 6,5 Gew.-% B₂O₃.

Dagegen sind B₂O₃-freie Gläser in US 4,607,016, JP 1-126 239 A, JP 61-236 631 A und JP 61-261 232 A beschrieben. Aufgrund der B₂O₃-Freiheit sind die Gläser schlecht schmelzbar und neigen zur Entglasung. Auch die in WO 97/30001 genannten Gläser enthalten kein B₂O₃.

DE 44 30 710 C1 beschreibt borsäurearme Borosilicatgläser mit hohen SiO₂-Gehalten (> 75 Gew.-%), aufgrund derer sie auch bei hohen Temperturen hoch viskos sind und nur kostenaufwendig schmelz- und läuterbar sind. Außerdem besitzen auch diese Gläser mit Transformationstemperaturen T_{g} zwischen 500 und 600 °C nur relativ geringe Temperaturbeständigkeiten. sind geeignet für den Einsatz in der Displaytechnik. Da sie jedoch zwingend wenigstens 1 bzw. 2 Gew.-% des Netzwerkwandlers ZnO enthalten, sind sie insbesondere für eine Verarbeitung auf einer Floatanlage nicht optimal geeignet.

So sind auch die Pb-haltigen und relativ hoch Zn-haltigen (≥ 3,5 Gew.-%) Gläser der JP 61-295 256 A für den Floatprozeß schlecht geeignet, da sich in der reduzierenden Formiergasatmosphäre durch Verdampfung und anschließende Kondensation bei zu hoher Konzentration leicht Beläge von ZnO und PbO bzw. Pb auf der Glasoberfläche bilden.

JP 3-164 445 A beschreibt Glaskeramiken mit ZnO-Gehalten ≥ 5 Gew.-% für Displays und Solarzellen. Sie weisen die gewünschten hohen Transformationstemperaturen auf, sind aber mit ihrer thermischen Ausdehnung von mehr als 4,0 · 10⁻⁶/K schlecht an µc-Si angepaßt.

Weitere relativ hoch Zn-haltige (≥ 8 Gew.-%) und außerdem Pb-haltige Glaskeramiken, ebenfalls mit zu hoher thermischen Ausdehnung sind in JP 1-208 343 A beschrieben. Entsprechend beschreibt EP 168 189 A2 Glaskeramiken mit ≥ 2 Gew.-% ZnO.

MgO-freie Gläser mit hohen BaO- und geringen Al₂O₃-Gehalten beschreibt DE 37 30 410 A1. Die angegebenen Spannungstemperaturen sind zu niedrig. Auch wird die Dichte der Gläser nachteilhaft hoch sein. Auch in den PCT-Anmeldungen WO 97/11919 und WO 97/11920 werden alkalifreie MgO-freie bzw. MgO-arme Glassubstrate beschrieben.

Die Gläser der US 5,116,788 enthalten mit 23 bis 28 mol-% RO hohe Anteile an Erdalkalioxiden, wodurch sie für Si eine zu hohe thermische Dehnung besitzen. Gleiches gilt für die alkalifreien hochtemperaturbeständigen Gläser, die als Lampenkolbengläser für Halogenlampen Verwendung finden. Sie sind hinsichtlich ihrer thermischen Dehnung an Mo angepaßt. Beispielhaft seien hier die Gläser der Schriften US 4,060,423 (BaO 6 - 16 Gew.-%), US 3,978,362 (CaO 14 - 21 Gew.-%), und EP 261 819 A1 (CaO 10,5 - 12,5 Gew.%; BaO 8,5 - 14 Gew.-%) genannt.

EP 672 629 A2 bzw. US 5,508,237 beschreiben Aluminosilicatgläser für Flachdisplays. Sie zeigen verschiedene Zusammensetzungsbereiche mit verschiedenen thermischen Ausdehnungskoeffizienten. Diese Gläser sollen angeblich nicht nur mit dem Overflow-Fusion-Ziehverfahren, sondern auch mit anderen Flachglasherstellungsverfahren verarbeitbar sein. Jedoch werden insbesondere die Gläser, die eine an polykristallines Si angepaßte thermischen Ausdehungskoeffizienten haben, sehr hohe Verarbeitungstemperaturen V_{A} aufweisen, die sie für den Floatprozeß ungeeignet machen. Wie bei den bisher beschriebenen Gläsern wird auch hier die visuelle Qualität nicht hoch sein, da kein Weg zu einer effektiven, insbesondere einer floatverträglichen Läuterung, gezeigt wird. Die beispielhaft genannten Läutermittel Sb₂O₃ und As₂O₃ sind aufgrund ihrer leichten Reduzierbarkeit für den Floatprozeß ungeeignet. Gleiches gilt für die optionalen Glaskomponenten Ta₂O₅ und Nb₂O₅.

Die Schrift JP 9-123 33 A, die Gläser für Festplatten betrifft, beschreibt Zusammensetzungen aus SiO₂, Al₂O₃, CaO und weiteren fakultativen Komponenten. Die aufgeführten Gläser sind hoch erdalkalioxidhaltig und besitzen damit eine hohe thermische Dehnung, die sie für den Einsatz in der LCD- bzw. PV-Technologie ungeeignet macht. Auch dürfte ihre visuelle Qualität nicht ausreichend sein.

Letzteres gi^{l}' auch für die relativ B₂O₃-reichen Gläser der JP 9-486 32 A, JP 9-156 953 A, und WO 98/27019, insbesondere da keine Wege zu einer effektiven Läuterung gezeigt werden.

JP 9-263 421 A und JP 10-454 22 A beschreiben alkalifreie Gläser für die Anwendung als Substrate in Flachdisplaysystemen, die im Floatverfahren verarbeitbar sind. Die aufgeführten Gläser weisen sehr hohe Verarbeitungstemperaturen und sehr hohe Temperaturen bei der Viskosität 10² dPas auf, was ihre Schmelzbarkeit verschlechtert und eine kostengünstige Herstellung unmöglich macht, da durch den nötigen Temperaturbereich auch sehr hohe Anforderungen an das Wannen- und Verteilermaterial hinsichtlich Korrosionsbeständigkeit bestehen. Die Gläser aus JP 10-454 22 A sind TiO₂-, ZrO₂- und CeO₂-frei. Die Dichte der BaO-haltigen Gläser ist mit ρ > 2,6 g/cm³ relativ hoch. Die Gläser aus JP 9-263 421 A enthalten vorzugsweise kein BaO und sind TiO₂-, ZrO₂-, CeO₂- und SnO₂-frei. Es ist Aufgabe der Erfindung, Gläser bereitzustellen, die die genannten physikalischen und chemischen Anforderungen an Glassubstrate für Flüssigkristall-Displays, insbesondere für TFT-Displays, und für Dünnschichtsolarzellen, insbesondere auf Basis von µc-Si erfüllen, Gläser, die eine hohe Temperaturbeständigkeit, einen prozeßgünsigen Verarbeitungsbereich und eine hohe Entglasungsstabilität aufweisen.

Die Aufgabe wird durch ein Aluminoborosilicatglas gemäß dem Hauptanspruch gelöst.

Das Glas enthält einen hohen Anteil an den netzwerkbildenden Komponenten SiO₂ und Al₂O₃ bei nur geringen Anteilen von B₂O₃:

Das Glas enthält 60,5 bis 69 Gew.-% SiO₂. Bei einem geringeren Gehalt verschlechtert sich die chemische Beständigkeit, bei einem höheren Gehalt nimmt die thermische Ausdehnung zu geringe Werte an und nimmt die Kristallisationsneigung des Glases zu. Bevorzugt ist ein Gehalt bei 68 Gew.-%, besonders bevorzugt bis 66 Gew.-% SiO₂.

Das Glas enthält 15 bis 24 Gew.-% Al₂O₃. Bei einem geringeren Gehalt erhöht sich die Kristallisationsanfälligkeit des Glases. Ein höherer Gehalt wirkt sich nachteilig auf die Prozeßtemperaturen bei der Heißformgebung aus, da die Verarbeitungstemperatur V_{A} stark erhöht würde. Bevorzugt ist ein Gehalt von wenigstens 16 Gew.-%, besonders bevorzugt von wenigstens 16,5 Gew.-% Al₂O₃. Bevorzugt ist ein Gehalt von höchstens 23 Gew.-%, besonders bevorzugt von < 22,5 Gew.-% Al₂O₃.

Der B₂O₃-Gehalt ist auf höchstens 4,5 Gew.-% beschränkt, um eine hohe Transformationstemperatur T_{g} zu erzielen. Vorzugsweise beträgt der B₂O₃-Gehalt weniger als 4,0 Gew.-%. Bevorzugt ist eine weitere Beschränkung des Gehaltes auf höchstens 3,5 Gew.-%, besonders auf weniger als 3,0 Gew.-% B₂O₃.

Ein kompletter Verzicht auf B₂O₃ ist nicht möglich, jedoch reichen schon geringe Anteile, nämlich wenigstens 0,5 Gew.-% aus, um den Schmelzfluß und die Kristallisationsbeständigkeit entscheidend zu verbessern. Aufgrund der geringen B₂O₃-Gehalte weist das Glas eine sehr hohe Säurebeständigkeit auf.

Ein wesentlicher Glasbestandteil sind die Erdalkalioxide. Zur Erzielung eines thermischen Ausdehnungskoeffizienten α _{20/300} zwischen 2,8 • 10⁻⁶/K und 4,0 • 10⁻⁶/K soll die Summe aus MgO, CaO, SrO und BaO zwischen 8 und 19 Gew.-%, bevorzugt zwischen 8 und 18 Gew.-% liegen.

Die einzelnen Oxide liegen in einem ausgewogenen Verhältnis zueinander vor. So enthält das Glas 3 bis 10 Gew.-%, bevorzugt bis 9 Gew.-%, besonders bevorzugt bis 8,5 Gew.-% MgO und 0,5 bis 8 Gew.-%, bevorzugt bis 7 Gew.-%, besonders bevorzugt 1,5 bis 6,5 Gew.-% SrO sowie 0,5 bis 5,5 Gew.-% BaO, besonders bevorzugt bis 4,5 Gew.-%. Weiter kann das Glas bis zu 10 Gew.-% CaO enthalten. Das Vorhandensein aller vier Erdalkalioxide ist bevorzugt, da dadurch die Entglasungsstabilität des Glases erhöht wird und da die einzelnen Oxide sich jeweils auf unterschiedliche Eigenschaften des Glases vorteilhaft auswirken. Daher enthält das Glas vorzugsweise auch wenigstens 0,5 Gew.-% CaO. Bevorzugt ist ein CaO-Gehalt zwischen 1 und 9 Gew.-%, besonders bevorzugt zwischen 2 und 8,5 Gew.-%.

Eher hohe Anteile an MgO und CaO wirken sich positiv auf die gewünschten Eigenschaften niedrige Dichte und niedrige Verarbeitungstemperatur aus, während ein relativ hoher Anteil an BaO die Kristallisationsbeständigkeit begünstigt. Im Hinblick auf die gewünschte geringe Dichte ist SrO gegenüber BaO bevorzugt, eine Komponente, die im Bezug auf die Kristallisationsstabilität fast genauso effektiv ist wie BaO.

Das Glas kann bis zu 2 Gew.-%, bevorzugt bis zu 1 Gew.-% ZrO₂ enthalten. ZrO₂ erhöht die Temperaturbeständigkeit des Glases. Bei Gehalten von mehr als 2 Gew.-% kann es jedoch aufgrund der Schwerlöslichkeit von ZrO₂ zum Auftreten von Schmelzrelikten im Glas kommen. Bevorzugt ist ein Vorhandensein von ZrO₂ mit wenigstens 0,1 Gew.-%.

Das Glas kann bis zu 2 Gew.-%, bevorzugt bis zu 1 Gew.-%, besonders bevorzugt bis zu 0,5 Gew.-% TiO₂ enthalten. TiO₂ verringert die Solarisationsneigung der Gläser. Bei Gehalten von mehr als 2 Gew.-% können durch Komplexbildung mit Fe³⁺-Ionen Farbstiche auftreten. Bevorzugt ist ein Vorhandensein von TiO₂ mit wenigstens 0,1 Gew.-%.

Das Glas kann bis zu < 1 Gew.-% ZnO enthalten. ZnO hat als Netzwerkwandler eine gerüstlockernde Funktion, und es hat einen geringeren Einfluß auf die thermische Ausdehnung als die Erdalkalioxide. Vorzugsweise, insbesondere bei einer Verarbeitung des Glases im Floatverfahren, wird auf ZnO verzichtet.

Das Glas ist alkalifrei. Unter alkalifrei wird hierbei verstanden, daß es im wesentlichen frei ist von Alkalioxiden, wobei es Verunreinigungen von weniger als 1000 ppm enthalten kann.

Das Glas enthält 0,1 bis 2 Gew.-% SnO₂. SnO₂ ist in dem hochschmelzenden alkalifreien Glassystem ein hocheffektives Läutermittel. Das Zinnoxid wird als SnO₂ eingesetzt, und sein vierwertiger Zustand wird durch die Zugabe anderer Oxide wie z. B. TiO₂ bzw. durch Zugabe von Nitraten stabilisiert. Der Gehalt an SnO₂ ist aufgrund seiner Schwerlöslichkeit bei Temperaturen unterhalb der Verarbeitungstemperatur V_{A} auf die genannte Obergrenze beschrankt. So werden Ausscheidungen microkristalliner Sn-haltiger Phasen vermieden. Bevorzugt ist ein Gehalt von höchstens 1 Gew.-%, besonders bevorzugt ein Gehalt von höchstens 0,7 Gew.-%.

Das Glas kann außerdem bis zu 1 Gew.-% CeO₂ enthalten. Bevorzugt ist ein CeO₂-Gehalt von wenigstens 0,1 Gew.-%. Durch die Kombination von SnO₂ mit CeO₂ wird das Redoxgleichgewicht SnO₂/SnO stabilisiert und es wird die sehr gute Läuterwirkung des SnO₂ noch verstärkt. Vorzugsweise ist der CeO₂-Gehalt auf höchstens 0,5 Gew.-% beschränkt.

U. a. weil somit auf die Läutermittel As₂O₃ und Sb₂O₃ verzichtet werden kann und die Gläser bis auf unvermeidliche Verunreinigungen sowohl frei von diesen Komponenten als auch weitgehend frei von anderen leicht reduzierbaren Bestandteilen sind, sind diese Gläser nicht nur mit verschiedenen Ziehverfahren, sondern auch mit dem Floatverfahren verarbeitbar. Soll das letztgenannte Verfahren nicht zum Einsatz kommen, so kann das Glas als zusätzliche(s) Läutermittel bis zu 1,5 Gew.-% As₂O₃ und/oder Sb₂O₃ enthalten. Unabhängig vom Verarbeitungsverfahren ist auch der Zusatz von je 1,5 Gew.-% Cl⁻ (beispielsweise als BaCl₂), F⁻ (z. B. als CaF₂) oder SO₄²⁻ (z. B. als BaSO₄) möglich. Die Summe aus As₂O₃, Sb₂O₃, Cl⁻, F⁻ und SO₄²⁻ soll jedoch 1,5 Gew.-% nicht überschreiten.

### Ausführungsbeispiele:

Aus herkömmlichen, von unvermeidlichen Verunreinigungen abgesehen im wesentlichen alkalifreien, Rohstoffen wurden bei 1620°C Gläser in Pt/lr-Tiegeln erschmolzen. Die Schmelze wurde anderthalb Stunden bei dieser Temperatur geläutert, anschließend in induktiv beheizte Platintiegel umgegossen und zur Homogenisierung 30 Minuten bei 1550°C gerührt.

Die Tabelle zeigt sechs Beispiele erfindungsgemäßer Gläser mit ihren Zusammensetzungen (in Gew.-% auf Oxidbasis) und ihren wichtigsten Eigenschaften. Angegeben sind:
• die Dichte ρ [g/cm³]
• der thermische Ausdehnungskoeffiszient α _{20/300} [10⁻⁶/K]
• die dilatometrische Transformationstemperatur T_{g}[°C] nach DIN 52324
• die Temperatur bei der Viskosität 10⁴ dPas (bezeichnet als T 4 [°C])
• die Temperatur bei der Viskosität 10¹³ dPas (bezeichnet als T 13 [°C]), gemessen nach DIN 52312, Teil 4
• die Temperatur bei der Viskosität von etwa 10^{13.2} dPas, das heißt den Oberen Kühlpunkt OKP [°C], gemessen nach DIN 52312, Teil 7 (ISO 7884-7)
• die Temperatur bei der Viskosität 10^{14,7} dPas, das heißt den Unteren Kühlpunkt UKP [°C], berechnet aus den OKP-Werten
• die Obere Entglasungsgrenze OEG [°C], das heißt die Liquidstemperatur
• die maximale Kristallwachstumsgeschwindigkeit vₘₐₓ [µm/h]
• die Hydrolytische Beständigkeit nach ISO 719 "H" [µg Na₂O/g]. Bei einem Basenäquivalent als Na₂O je g Glasgries von ≤ 31 µg/g gehören die Gläser der Hydrolytischen Klasse 1 ("Chemisch hoch resistentes Glas") an.
• eine Säurebeständigkeit als Gewichtsverlust (Abtragswert) von allseitig polierten Glasplättchen der Abmessungen 50 mm x 50 mm x 2 mm nach Behandlung mit 5 %iger Salzsäure für 24 Stunden bei 95°C [mg/cm²].

**Tabelle**

| Beispiele: Zusammensetzungen (in Gew.-% auf Oxidbasis) und wesentliche Eigenschaften von erfindungsgemäßen Gläsern. | | | | | | |
|---|---|---|---|---|---|---|
| | 1 | 2 | 3 | 4 | 5 | 6 |
| SiO₂ | 61,1 | 63,0 | 65,0 | 65,0 | 65,0 | 62,1 |
| B₂O₃ | 2,9 | 2,0 | 1,0 | 1,0 | 1,0 | 4,4 |
| Al₂O₃ | 21,0 | 19,0 | 17,0 | 17,0 | 17,7 | 21,9 |
| MgO | 3,5 | 4,5 | 5,5 | 8,0 | 8,0 | 6,0 |
| CaO | 8,0 | 8,0 | 8,0 | 5,5 | 5,5 | 1,1 |
| SrO | 2,0 | 2,0 | 2,0 | 2,0 | 2,0 | 2,9 |
| BaO | 0,5 | 0,5 | 0,5 | 0,5 | 0,5 | 1,0 |
| ZrO₂ | 0,2 | 0,2 | 0,2 | 0,2 | -- | -- |
| SnO₂ | 0,3 | 0,3 | 0,3 | 0,3 | 0,3 | 0,5 |
| TiO₂ | 0,2 | 0,2 | 0,2 | 0,2 | -- | -- |
| CeO₂ | 0,3 | 0,3 | 0,3 | 0,3 | -- | -- |
| | | | | | | |
| ρ [g/cm³] | 2,540 | 2,545 | 2,553 | 2,551 | 2,533 | 2,500 |
| α _{20/300} [10⁻⁶/K] | 3,73 | 3,83 | 3,94 | 3,78 | 3,72 | 3,00 |
| Tg [°C] | 765 | 762 | 765 | 762 | 772 | 772 |
| T 4 [°C] | 1296 | 1301 | 1295 | 1290 | 1295 | 1311 |
| T 13 [°C] | 775 | 772 | 770 | 771 | 777 | 781 |
| QKP [°C] | 770 | 768 | 767 | 765 | 769 | 776 |
| UKP [°C] | 722 | 720 | 721 | 719 | 722 | 730 |
| OEG [°C] | ∼ 1300 | 1285 | 1295 | 1300 | ∼ 1300 | n. b. |
| vₘₐₓ [µm/h] | 59 | 34 | 27 | 26 | 24 | n. b. |
| "H" [µg Na₂O /g] | 6 | 9 | 10 | 10 | 10 | 5 |
| HCl [mg/cm²] | 0,11 | 0,04 | 0,01 | 0,03 | 0,02 | 0,27 |

| | | | | | | |
|---|---|---|---|---|---|---|
| n. b.= nicht bestimmt | | | | | | |

Wie die Ausführungsbeispiele verdeutlichen, besitzen die erfindungsgemäßen Gläser folgende vorteilhafte Eigenschaften:
- eine thermische Dehnung α _{20/300} zwischen 2,8 • 10⁻⁶/K und 4,0 • 10⁻⁶/K, damit angepaßt an das Ausdehnungsverhalten von Si (a-, poly- und µc-Si)
- mit T_{g} > 720 °C eine sehr hohe Transformationstemperatur. Dies ist wesentlich für einen möglichst geringen herstellungsbedingten Schrumpf ("compaction") und für die Verwendung der Gläser als Substrate in Hochtemperaturabscheideverfahren.
- mit ρ < 2,600 g/cm³ eine geringe Dichte
- eine Temperatur bei der Viskosität 10⁴ dPas von maximal 1330 °C, was einen prozeßgünstigen Verarbeitungsbereich bedeutet, und eine gute Entglasungsstabilität. Diese beiden Eigenschaften ermöglichen es, das Glas als Flachglas mit den verschiedenen Ziehverfahren, z.B. Microsheet-Down-draw-, Up-draw- oder Overflow-fusion-Verfahren und in bevorzugter Ausführung, wenn es frei von As₂O₃ und Sb₂O₃ ist, auch mit dem Floatverfahren herstellbar ist.
- eine hohe chemische Beständigkeit, dokumentiert durch die hervorragende Säurebeständigkeit, was sie ausreichend inert gegen die bei der Herstellung von Flachbildschirmen verwendeten Chemikalien macht.

Weiter verfügen die Gläser über eine hohe Solarisationsstabilität, eine hohe Transparenz und eine hohe Temperaturwechselbeständigkeit.

Damit sind die Gläser hervorragend geeignet für die Verwendung als Substratglas in der Displaytechnik, insbesondere für TFT-Displays, und in der Dünnschicht-Photovoltaik, insbesondere auf Basis von µc-Si.

## Patentansprüche

1. Alkalifreies Aluminoborosilicatglas, das folgende Zusammensetzung (in Gew.-% auf Oxidbasis) aufweist:
| | |
|---|---|
| SiO₂ | 60,5 - 69 |
| B₂O₃ | 0,5 - 4,5 |
| Al₂O₃ | 15 - 24 |
| MgO | 3-10 |
| CaO | 0-10 |
| SrO | 0,5 - 8 |
| BaO | 0,5 - 5,5 |
| mit MgO + CaO + SrO + BaO | 8 - 19 |
| SnO₂ | 0,1 - 2 |
| ZrO₂ | 0 - 2 |
| TiO₂ | 0 - 2 |
| CeO₂ | 0 - 1 |
| ZnO | 0 - < 1 |

2. Aluminoborosilicatglas nach Anspruch 1,
**gekennzeichnet durch** folgende Zusammensetzung (in Gew.-% auf Oxidbasis):
| | |
|---|---|
| SiO₂ | 60,5 - 68 |
| B₂O₃ | 0,5 - 4,5 |
| Al₂O₃ | 16 - 23 |
| MgO | 3 - 9 |
| CaO | 1 - 9 |
| SrO | 0,5 - 7 |
| BaO | 0,5 - 5,5 |
| mit MgO + CaO + SrO + BaO | 8 - 18 |
| SnO₂ | 0,1 - 1 |
| ZrO₂ | 0 - 1 |
| TiO₂ | 0 - 1 |
| CeO₂ | 0 - 1 |
| ZnO | 0 - <1 |

3. Aluminoborosilicatglas nach Anspruch 1 oder 2,
**dadurch gekennzeichnet,**
**daß** es wenigstens 0,1 Gew.-% ZrO₂ enthält.

4. Aluminoborosilicatglas nach wenigstens einem der Ansprüche 1 bis 3,
**dadurch gekennzeichnet,**
**daß** es wenigstens 0,1 Gew.-% TiO₂ enthält.

5. Aluminoborosilicatglas nach wenigstens einem der Ansprüche 1 bis 4,
**dadurch gekennzeichnet,**
**daß** es wenigstens 0,1 Gew.-% CeO₂ enthält.

6. Aluminoborosilicatglas nach wenigstens einem der Ansprüche 1 bis 5,
**dadurch gekennzeichnet,**
**daß** es < 4,0 Gew.-% B₂O₃ enthält.

7. Aluminoborosilicatglas nach wenigstens einem der Ansprüche 1 bis 6, **gekennzeichnet durch** folgende Zusammensetzung (in Gew.-% auf Oxidbasis):
| | |
|---|---|
| SiO₂ | 60,5 - 66 |
| B₂O₃ | 0,5 - 3,5 |
| Al₂O₃ | 16,5 - < 22,5 |
| MgO | 3 - 8,5 |
| CaO | 2 - 8,5 |
| SrO | 1,5 - 6,5 |
| BaO | 0,5 - 4,5 |
| mit MgO + CaO + SrO + BaO | 8 - 18 |
| SnO₂ | 0,1 - 0,7 |
| ZrO₂ | 0,1 - 1 |
| TiO₂ | 0,1 - 0,5 |
| CeO₂ | 0,1 - 0,5 |

8. Aluminoborersilicatglas nach wenigstens einem der Ansprüche 1 bis 7,
**dadurch gekennzeichnet,**
**daß** es < 3,0 Gew.-% B₂O₃ enthält.

9. Auf einer Floatanlage herstellbares Aluminoborosilicatglas nach wenigstens einem der Ansprüche 1 bis 8,
**dadurch gekennzeichnet,**
**daß** es bis auf unvermeidliche Verunreinigungen frei ist von Arsenoxid und Antimonoxid.

10. Aluminoborosilicatglas nach wenigstens einem der Ansprüche 1 bis 8,
**dadurch gekennzeichnet,**
**daß** es zusätzlich enthält:
| | |
|---|---|
| As₂O₃ | 0-1,5 |
| Sb₂O₃ | 0 - 1,5 |
| Cl⁻ | 0 - 1,5 |
| F⁻ | 0 - 1,5 |
| SO₄²⁻ | 0 - 1,5 |
| mit As₂O₃ + Sb₂O₃ + Cl⁻ + F⁻ + SO₄²⁻ | ≤ 1,5 |

11. Aluminoborosilicatglas nach wenigstens einem der Ansprüche 1 bis 10, das einen thermischen Ausdehnungskoeffizienten α_{20/300} von 2,8 • 10⁻⁶/K - 4,0 • 10⁻⁶/K, eine Transformationstemperatur Tg > 720 °C und eine Dichte ρ < 2,600 g/cm³ aufweist.

12. Verwendung des Aluminoborosilicatglases nach wenigstens einem der Ansprüche 1 bis 10 als Substratglas in der Displaytechnik.

13. Verwendung des Aluminoborosilicatglases nach wenigstens einem der Ansprüche 1 bis 10 als Substratglas in der Dünnschicht-Photovoltaik.

## Claims

1. Alkali-free aluminoborosilicate glass which has the following composition (in % by weight, based on oxide):
| | |
|---|---|
| SiO₂ | 60.5 - 69 |
| B₂O₃ | 0.5 - 4.5 |
| Al₂O₃ | 15 - 24 |
| MgO | 3 - 10 |
| CaO | 0 - 10 |
| SrO | 0.5 - 8 |
| BaO | 0.5 - 5.5 |
| with MgO+CaO+SrO+BaO | 8 - 19 |
| SnO₂ | 0.1 - 2 |
| ZrO₂ | 0-2 |
| TiO₂ | 0-2 |
| CeO₂ | 0 - 1 |
| ZnO | 0 - < 1. |

2. Aluminoborosilicate glass according to Claim 1, **characterized by** the following composition (in % by weight, based on oxide):
| | |
|---|---|
| SiO₂ | 60.5 - 68 |
| B₂O₃ | 0.5 - 4.5 |
| Al₂O₃ | 16 - 23 |
| MgO | 3-9 |
| CaO | 1-9 |
| SrO | 0.5 - 7 |
| BaO | 0.5 - 5.5 |
| with MgO+CaO+SrO+BaO | 8 - 18 |
| SnO₂ | 0.1 - 1 |
| ZrO₂ | 0 - 1 |
| TiO₂ | 0-1 |
| CeO₂ | 0-1 |
| ZnO | 0 - < 1. |

3. Aluminoborosilicate glass according to Claim 1 or 2, **characterized in that** it contains at least 0.1% by weight of ZrO₂.

4. Aluminoborosilicate glass according to at least one of Claims 1 to 3, **characterized in that** it contains at least 0.1% by weight of TiO₂.

5. Aluminoborosilicate glass according to at least one of Claims 1 to 4, **characterized in that** it contains at least 0.1% by weight of CeO₂.

6. Aluminoborosilicate glass according to at least one of Claims 1 to 5, **characterized in that** it contains < 4.0% by weight of B₂O₃.

7. Aluminoborosilicate glass according to at least one of Claims 1 to 6, **characterized by** the following composition (in % by weight, based on oxide):
| | |
|---|---|
| SiO₂ | 60.5 - 66 |
| B₂O₃ | 0.5 - 3.5 |
| Al₂O₃ | 16.5 - < 22.5 |
| MgO | 3 - 8.5 |
| CaO | 2 - 8.5 |
| SrO | 1.5 - 6.5 |
| BaO | 0.5 - 4.5 |
| with MgO+CaO+SrO+BaO | 8 - 18 |
| SnO₂ | 0.1 - 0.7 |
| ZrO₂ | 0.1 - 1 |
| TiO₂ | 0.1 - 0.5 |
| CeO₂ | 0.1 - 0.5. |

8. Aluminoborosilicate glass according to at least one of Claims 1 to 7, **characterized in that** it contains < 3.0% by weight of B₂O₃.

9. Aluminoborosilicate glass according to at least one of Claims 1 to 8 which can be produced on a float installation, **characterized in that** apart from inevitable impurities it is free of arsenic oxide and antimony oxide.

10. Aluminoborosilicate glass according to at least one of Claims 1 to 8, **characterized in that** it additionally contains:
| | |
|---|---|
| AS₂O₃ | 0 - 1.5 |
| Sb₂O₃ | 0 - 1.5 |
| Cl⁻ | 0 - 1.5 |
| F⁻ | 0 - 1.5 |
| SO₄²⁻ | 0 - 1.5 |
| with As₂O₃+Sb₂O₃+Cl⁻+F⁻+SO₄²⁻ | ≤ 1.5. |

11. Aluminoborosilicate glass according to at least one of Claims 1 to 10, which has a coefficient of thermal expansion α₃₀/₃₀₀ of 2.8·10⁻⁶/K - 4.0·10⁻⁶/K, a transformation temperature Tg > 720°C and a density ρ < 2.600g/cm³.

12. Use of the aluminoborosilicate glass according to at least one of Claims 1 to 10 as substrate glass in display technology.

13. Use of the aluminoborosilicate glass according to at least one of Claims 1 to 10 as substrate glass in thin-film photovoltaics.

## Revendications

1. Verre d'aluminoborosilicate exempt de métal alcalin, qui présente la composition suivante (en % en poids sur base d'oxydes) :
SiO₂ 60,5 - 69
B₂O₃ 0,5 - 4,5
Al₂O₃ 15 - 24
MgO 3 - 10
CaO 0 - 10
SrO 0,5 - 8
BaO 0,5 - 5,5
avec MgO + CaO + SrO + BaO 8 - 19
SnO₂ 0,1 - 2
ZrO₂ 0 - 2
TiO₂ O - 2
CeO₂ 0 - 1
ZnO 0 - < 1

2. Verre d'aluminoborosilicate selon la revendication 1, **caractérisé par** la composition suivante (en % en poids sur base d'oxydes):
SiO₂ 60,5 - 68
B₂O₃ 0,5 - 4,5
Al₂O₃ 16 - 23
MgO 3 - 9
CaO 1 - 9
SrO 0,5 - 7
BaO 0,5 - 5,5
avec MgO + CaO + SrO + BaO 8 - 18
SnO₂ 0,1 - 1
ZrO₂ 0 - 1
TiO₂ 0 - 1
CeO₂ 0 - 1
ZnO 0 - < 1

3. Verre d'aluminoborosilicate selon la revendication 1 ou 2, **caractérisé en ce qu'**il contient au moins 0,1% en poids de ZrO₂.

4. Verre d'aluminoborosilicate selon au moins l'une quelconque des revendications 1 à 3, **caractérisé en ce qu'**il contient au moins 0,1% en poids de TiO₂.

5. Verre d'aluminoborosilicate selon au moins l'une quelconque des revendications 1 à 4, **caractérisé en ce qu'**il contient au moins 0,1% en poids de CeO₂.

6. Verre d'aluminoborosilicate selon au moins l'une quelconque des revendications 1 à 5, **caractérisé en ce qu'**il contient < 4,0% en poids de B₂O₃.

7. Verre d'aluminoborosilicate selon au moins l'une quelconque des revendications 1 à 6, **caractérisé par** la composition suivante (en % en poids sur base d'oxydes):
SiO₂ 60,5 - 66
B₂O₃ 0,5 - 3,5
Al₂O₃ 16,5 - < 22,5
MgO 3 - 8,5
CaO 2 - 8,5
SrO 1,5 - 6,5
BaO 0,5 - 4,5
avec MgO + CaO + SrO + BaO 8 - 18
SnO₂ 0,1 - 0,7
ZrO₂ 0,1 - 1
TiO₂ 0,1 - 0,5
CeO₂ 0, 1 - 0,5

8. Verre d'aluminoborosilicate selon au moins l'une quelconque des revendications 1 à 7, **caractérisé en ce qu'**il contient < 3,0% en poids de B₂O₃.

9. Verre d'aluminoborosilicate fabricable sur une installation de flottage selon au moins l'une quelconque des revendications 1 à 8, **caractérisé en ce qu'**il est exempt d'oxyde d'arsenic et d'oxyde d'antimoine jusqu'à des impuretés inévitables.

10. Verre d'aluminoborosilicate selon au moins l'une quelconque des revendications 1 à 8, **caractérisé en ce qu'**il contient en outre:
| | |
|---|---|
| As₂O₃ | 0 - 1,5 |
| Sb₂O₃ | 0 - 1,5 |
| CI⁻ | 0 - 1,5 |
| F⁻ | 0 - 1,5 |
| SO₄²⁻ | 0 - 1,5 |
| avec As₂O₃ + Sb₂O₃ + CI⁻ + F⁻ + SO₄²⁻ | ≤ 1,5 |

11. Verre d'aluminoborosilicate selon au moins l'une quelconque des revendications 1 à 10, qui présente un coefficient de dilatation thermique α_{20/300} de 2,8 • 10⁻⁶/K - 4,0•10⁻⁶/K, une température de transformation T_{g} > 720°C et une masse volumique ρ < 2,600 g/cm³.

12. Utilisation du verre d'aluminoborosilicate selon au moins l'une quelconque des revendications 1 à 10 comme verre de substrat dans la technique d'affichage.

13. Utilisation du verre d'aluminoborosilicate selon au moins l'une quelconque des revendications 1 à 10 comme verre de substrat dans la technique photovoltaïque en couches minces.
